(19) Europäisches Patentamt
European Patent Office
Office européen des brevets

(11) **EP 2 575 102 A1**

(12) **EUROPEAN PATENT APPLICATION**

(43) Date of publication:
**03.04.2013 Bulletin 2013/14**

(51) Int Cl.:
***G06Q 40/06*** *(2012.01)*

(21) Application number: **11009983.5**

(22) Date of filing: **20.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2011 IN MU28082011**

(71) Applicant: **Tata Consultancy Services Limited 400021 Mumbay (IN)**

(72) Inventors:
 • **Agarwal, Rahul Gurgaon-122001 Haryana (IN)**
 • **Goel, Vipin Gurgaon-122016 Haryana (IN)**

(74) Representative: **Manitz, Finsterwald & Partner GbR Postfach 31 02 20 80102 München (DE)**

(54) **Event risk assessment**

(57)     The present subject matter discloses a system and method for assessing overall risk rating of one or more events in transactions relating to financial services. In one implementation, the method includes obtaining at least one parameter indicative of a risk criteria associated with the one or more events. The method further includes assigning values to the at least one parameter and determining a risk rating based on the values assigned for the at least one parameter. A risk index is generated for the one or more events based on the risk rating. Overall risk rating of the one or more events is assessed based at least in part on the risk index and a threshold value for the one or more events.

Figure 1

**Description**

TECHNICAL FIELD

The present subject matter relates, in general, to computing systems and, in particular, to systems and methods for assessing event risks in financial activities.

BACKGROUND

The process of trading involves various entities such as investors, traders, trade exchanges, and brokerage units. In certain cases, it may also involve sale and purchase of stocks, bonds, currencies, commodities, and other financial instruments. Investors may be individuals or institutions such as corporate bodies, financial units etc. Most often these investors, be it individuals or corporate bodies, trade through a brokerage unit, i.e., a broker, which act as an intermediate link between the investors and the trade exchanges. The function of the broker is conventionally implemented through investment banks.

Generally, an investment bank (IB) can be considered to include a financial institution that assists individuals, corporations and governments in raising capital by underwriting and/or acting as the client's agent in the process of trading. Generally, functions of any investment bank is targeted at getting orders, in relation to the securities being traded, transacted at the best possible rate, and involving the least possible risk at affordable cost for the investors. An IB has three operating components - a front office, a middle office and a back office. The middle office of IB, amongst other aspects, also manages and assesses risk associated with various transactions that its investors may undertake.

SUMMARY

This summary is provided to introduce concepts related to systems and methods for assessing risk associated with one or more events involved in financial activities and the concepts are further described below in the detailed description. This summary is neither intended to identify essential features of the claimed subject matter nor is it intended for use in determining or limiting the scope of the claimed subject matter.

In one implementation, the method for assessing overall risk rating of one or more events includes obtaining at least one parameter indicative of a risk criteria associated with the one or more events. The method further includes assigning values to the at least one parameter and determining a risk rating based on the values assigned for the at least one parameter. A risk index is generated for the one or more events based on the risk rating. Overall risk rating of the one or more events is assessed based at least in part on the risk index and a threshold value for the one or more events.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Figure 1 illustrates a network implementation of a risk assessment system, in accordance with an embodiment of the present subject matter.

Figure 2 illustrates a method of assessing risk associated with one or more events involved in financial activities, in accordance with an implementation of the present subject matter.

DETAILED DESCRIPTION

Systems and methods for monitoring financial activities are described herein. The systems and methods can be implemented in a variety of computing systems. The computing systems that can implement the described method(s) include, but are not restricted to, mainframe computers, workstations, personal computers, desktop computers, minicomputers, servers, multiprocessor systems, laptops, mobile computing devices and the like.

The present subject matter describes systems and methods for assessing risk associated with one or more corporate action events coordinated by a middle office of an investment bank. The systems and methods ensure that the economic risks associated with various events of a financial transaction are assessed accurately, correctly and on time.

As will be known by a person skilled in the art, the middle office ensures that the financial transactions are accomplished with least possible risk, and at an affordable cost for the investors. The middle office functions are mainly centered on management of risk associated with the transactions carried out by the investors and indicates the changes in risk assessment to all the investors involved in the transactions.

Conventionally risk management is performed by the middle office and is may be dependent on the type of investor. Individual investors are considered risky when compared to the corporate investors due to their volatile nature and due to the lack of financial credibility, i.e., their credit worthiness or credit score. On the other hand, institutions and organization are considered to be financially more secure and less risky as a result of substantial means, assets, etc. As can be seen, risk assessment and management are critical aspects of investment banking which are applicable for individual users as well as large institutions.

However, with the recent advances of computer and communications technology, trading has taken a new dimension altogether. Electronic trading involves traders and investors trading various financial instruments over interfaces, such as web-based trading portals, with different components of a trading system at the stock exchanges, the brokerage units, and the traders' and inventors' ends interplaying with each other. Since the identity of each of such entities is difficult to establish in such transactions, the risk associated with such transaction may also get altered considerably.

As indicated previously, risk assessment function is primarily performed by the middle office component of an investment bank. Recently, risk management at the middle office involves assessing the risk involved in various corporate action events e.g. cash dividend, bonus issue, optional dividend etc Events may be high risk or low risk depending upon the business importance / criticality of the event for the bank. It is therefore an essential aspect of the investment bank to manage the risk associated with the events and ensure that at all circumstances the potential high risk events are attended by the users on priority.

The present subject matter provides a method for calculating overall risk rating in real-time assessment of risk of one or more events in transactions relating to financial services. In one implementation, the risk is assessed based on at least one parameter associated with one or more of such events. In one implementation, the method includes continuous re-assessment of the overall risk rating associated with one or more events. The parameter is selected based on business impact perspectives, and are capable of being defined by users. Examples of such parameters includes, but are not limited to event classification, event type, number of options, security listing region, number of entitled position, position types, number of short book positions, loans, and such.

Once defined, one or more risk values are assigned based on the risk assessment guidelines to each of the parameters. In one implementation, the guidelines may indicate various criteria for an event based on one or more values. In one implementation, the risk value may be denoted by a logical low/medium/high for each value associated with the parameter. Upon assigning of risk values to the at least one parameter, a risk rating score associated with each value is determined. The risk rating score can be considered to be indicative of the impact such events would pose as to the risk associated with the transaction.

Once the risk rating scores are obtained, a weighted average risk score (WARS) of the risk rating scores for each of the one or more events is calculated. Thereafter, a threshold value for risk rating score is defined, which is then compared with the WARS to obtain the overall event risk rating for the event. Based on the overall event risk rating, further actions or transactions can be authorized.

In an implementation, the risk assessment system of the present subject matter may involve assessment of event risks associated with the middle office of the investment bank. In an implementation, the risk assessment system of the middle office can determine the risk associated with an ongoing corporate action event. The values of the parameters affecting the risk rating associated with the corporate action event may constantly change during its lifecycle. For example, overall value of the event may increase in case a High Networked Individual (HNI) buys the underlying stock and hence becomes an eligible shareholder of the potential proceeds of the event. In the above example, the value rises in spite of the less number of shareholders. In an implementation, the risk assessment system of the present subject matter determines the change in values of each parameter associated with the event and accordingly assesses the risk associated with each event. In another implementation, the risk assessment system can include a new parameter depending upon the dynamic market conditions. Re-assessment of the risk associated with each event needs to be done to keep a tab on any changes during the lifecycle of the event.

As will be appreciated by a person skilled in the art, the present subject matter provides a risk assessment system for one or more events associated with the financial transactions involved in the middle office of the investment bank. The present subject matter provides a risk assessment method and system that enables the user of the middle office to prioritize the events without the need for setting up a watch-list to monitor the financial transactions. The system assesses overall risk rating of each event, which enhances the risk assessment methods involving one or more events within the financial transactions of the middle office. The system also provides consistent error-free assessment of event risks. Further, the parameter driven assessment of overall risk rating of the present subject matter makes it flexible. While aspects of described systems and methods for event risk assessment can be implemented in any number of different computing systems, environments, and/or configurations, the embodiments are described in the context of the following exemplary system(s).

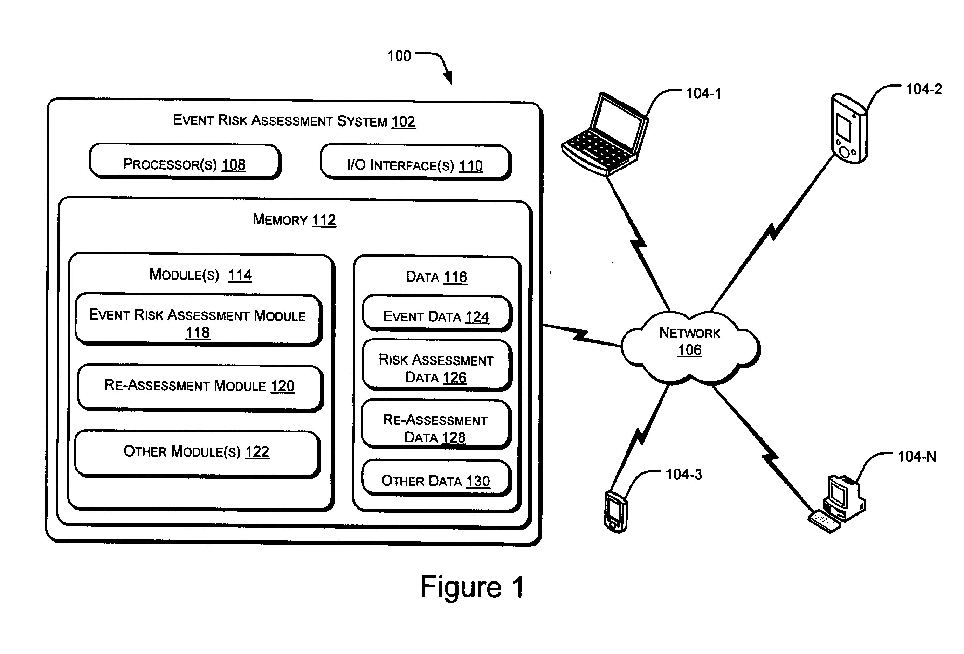

Figure 1 illustrates a network environment 100 implementing an event risk assessment system 102 (henceforth referred to as the ERA system 102), configured to assess risks associated with one or more events in transactions relating to financial services, according to an embodiment of the present subject matter. The ERA system 102 may be configured to assess risks of one or more corporate action events associated with financial transactions involving users in a financial institution, for example an investment bank, a stock brokerage bank, an asset management firm,. In one implementation, the ERA system 102 may be included within a middle office of the investment bank to assess an overall risk rating of one or more events based on various configurable parameters. The ERA system 102 may be implemented in a variety of computing systems such as a laptop computer, a desktop computer, a notebook, a workstation, a mainframe computer, a server, a network server and the like. It will be understood that users, i.e., the executives of the middle office of the investment bank, may access the ERA system 102 through one or more client devices 104 or applications residing on client devices 104. Examples of the client devices 104 include, but are not limited to, a portable computer 104-1, a personal digital assistant 104-2, a handheld device 104-3, and a workstation 104-N. As shown in the figure, such client devices 104 are communicatively coupled to the ERA system 102 through a network 106 for facilitating one or more users, to access and assess the risk involved in one or more events associated with the financial transactions.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further the network 106 may include a variety of network devices, including routers, bridges, servers, computing devices, storage devices, etc.

In one implementation, the ERA system 102 includes a processor(s) 108, interface(s) 110, and a memory 112 coupled to the processor(s) 108. The processor(s) 108 may be implemented as one or more microprocessors, microcomputers, microcontrollers, digital signal processors, central processing units, state machines, logic circuitries, and/or any devices that manipulate signals based on operational instructions. Among other capabilities, the processor(s) 108 are configured to fetch and execute computer-readable instructions stored in the memory 112.

The interface(s) 110 may include a variety of software and hardware interfaces, for example, a web interface, a graphical user interface, etc., allowing the ERA system 102 to interact with the client devices 104. Further, the interface(s) 110 may enable the ERA system 102 to communicate with other computing devices, such as web servers and external data servers (not shown in figure). The interface(s) 110 can facilitate multiple communications within a wide variety of networks and protocol types, including wired networks, for example LAN, cable, etc., and wireless networks such as WLAN, cellular, or satellite. The interface(s) 110 may include one or more ports for connecting a number of devices to each other or to another server.

The memory 112 can include any computer-readable medium known in the art including, for example, volatile memory (e.g., RAM), and/or non-volatile memory (e.g., EPROM, flash memory, etc.). In one embodiment, the memory 112 includes module(s) 114 and data 116. The modules 114 further include an event risk assessment (ERA) module 118, a re-assessment module 120, and other module(s) 122. It will be appreciated that such modules may be represented as a single module or a combination of different modules. Additionally, the memory 112 further includes data 116 that serves, amongst other things, as a repository for storing data fetched processed, received and generated by one or more of the modules 114. The data 116 includes, for example, event data 124, assessment data 126, re-assessment data 128, and other data 130. In one embodiment, the event data 124, the assessment data 126, the re-assessment data 128, and the other data 130, may be stored in the memory 112 in the form of data structures. Additionally, the aforementioned data can be organized using data models, such as relational or hierarchical data models.

In one implementation, the ERA module 118 assesses risk associated with one or more events. The one or more events may relate to financial activities in the investment bank. The ERA module 118 may obtain at least one parameter pertaining to a risk criteria associated with the one or more events. The risk criteria may include, for example, classification of the one or more events, type of the one or more events, number of options associated with the one or more events, geographic location of the one or more events, number of entitled positions of the one or more events, type of positions of the one or more events, and number of short book positions and loans associated with the one or more events. Further to the above mentioned risk criteria the ERA module 118 is configured to include additional criteria to defme the parameters for a particular event. The additional criteria may include a user defmed extendable parameter (UDEP) based criteria, which is obtained for the assessment of risk based on the market condition and also influenced by trends in corporate action industry.

The ERA module 118 retrieves the information about the one or more events that are to be assessed for risk, from the event data 124. Further, the event data 124 stores the one or more events based on the determination of overall risk rating by the ERA module 118 enabling the users of the middle office to classify the ongoing events based on their risk rating.

The ERA module 118 may assign values to the parameter based on the risk criteria associated with the one or more events. The values may be assigned based on one or more conditions that classify the risk criteria of the one or more events. In an implementation, the values for the event risk criteria of classification of one or more events may include, for example, mandatory, mandatory with options, and voluntary. Similarly, the values for the event risk criteria "security listing region" may include, for example, Europe & Middle East (EMEA), The United States of America (US), Asia Pacific (APAC), and other nations (Emerging). In an implementation, the values assigned by the ERA module 118 for each event risk criteria may include numerical values. For example, the values assigned for the event risk criteria of number of entitled positions may include, <5, 6 to 10, and >10. It is to be understood that these values are only indicative of the market condition at that particular instant when the middle office carries out risk assessment. However, based on the dynamic market conditions, the values assigned for each of the event risk criteria may include substantial variations. For example, the deterministic factor for the values assigned for the number of entitled positions may differ from <5 to <3 and so on during the lifecycle of the one or more events.

After assigning the values, the ERA module 118 may determine a risk rating based on the values assigned for the parameter. The risk associated with each event is rated based on a logical rating such as low/medium/high. In an implementation, the risk associated with the event risk criteria of the number of entitled positions whose assigned values are <5, 6 to 10, and >10, may be rated, for example, as LOW for <5, MEDIUM for 6 to 10, and HIGH for >10. As is the case with the values assigned, the risk rating determined by the ERA module 118 may also vary from one instant of time to another. In an implementation, the risk rating for the event risk criteria of the number of entitled positions whose assigned values vary as <3, 4 to 10, and >10, may be rated as LOW for <3 and so on depending upon the assigned values.

The ERA module 118 may store the information related to determination of risk rating in the risk assessment data 126. Depending upon the fluctuating market condition, the risk associated with each parameter may vary substantially. In an implementation, the ERA module 118 may include, for example, modifying, adding or deleting the risk ratings for each of the parameters.

Once the risk rating is obtained, the ERA module 118 generates a risk index for the one or more events based on the determined risk rating. The generation of risk index, may include, for example, assigning numerical risk rating scores for each of the logical low/medium/high risk ratings. The risk index is a numerical value that is characteristic of the risk associated with each of the parameters that is collectively indicative of the risk associated with the event. On assigning numerical risk rating scores to the logical risk ratings, each parameter at an instant of time, may include a particular score. In an implementation, the risk rating scores, for example, may include $R_1$ for a logical risk rating of LOW, $R_2$ for a logical risk rating of MEDIUM, and $R_3$ for a logical risk rating of HIGH.

In an implementation, the generation of risk index, may include calculation of weighted average risk score (WARS) of the risk rating scores associated with each of the parameters of the one or more events. In an implementation, for example, an event A can be defined by a plurality of parameters. Each of the plurality of parameters may include, for example, a risk rating score of $R_1$, $R_2$ or $R_3$ depending on the logical risk rating of LOW, MEDIUM, or HIGH respectively. In an implementation, the WARS can be calculated by determining the number of occurrences of each risk rating score and obtaining the product of each risk rating score ($R_1$, $R_2$ or $R_3$) and their respective occurrences for the plurality of parameters for each event. The ratio of sum of all such products to the sum of all the occurrences provides the WARS. In one implementation, the WARS can be stored in risk assessment data 126.

Table 1 depicts a specimen of the various parameters that can assess the risk associated with the one or more events. It should be understood that the details in the Table 1 are indicative and not an exhaustive list of various parameters for event risk assessment.

Table 1

| Event Risk Criteria | Value | Risk Rating |
|---|---|---|
| Event Classification | Mandatory | LOW |
| | Mandatory with Options | MEDIUM |
| | Voluntary | HIGH |
| Event Type | Risk to be assessed by user based on individual circumstances | LOW |
| | | MEDIUM |
| | | HIGH |
| Number of Options | 1 | LOW |
| | 2 | MEDIUM |
| | > 2 | HIGH |

(continued)

| Event Risk Criteria | Value | Risk Rating |
|---|---|---|
| Security Listing Region | EMEA | LOW |
| | US | LOW |
| | APAC | MEDIUM |
| | Emerging | HIGH |
| Number of Entitled Positions | < 5 | LOW |
| | 6 to 10 | MEDIUM |
| | > 10 | HIGH |
| Position Types | Books or Depots ONLY | LOW |
| | Books, Depots, Borrows or Loans ONLY | MEDIUM |
| | Includes Buys or Sells | HIGH |
| Number of Short Book Positions & Loans | 0 | LOW |
| | 1 to 3 | MEDIUM |
| | > 3 | HIGH |

Table 2 provides one such illustration, where, for an event A at a particular instance of time in the lifecycle of the event, say for example, at 'instant 1', overall risk rating is calculated. For the event A, a plurality of parameters ranging from $P_1$ to $P_7$ that enables the user of middle office to assess the risk associated with the event is determined. For each of the parameters $P_1$ to $P_7$, various risk criteria is defined. It is to be understood that the risk criteria defined for each of the parameters are only indicative and not exhaustive. For each of the risk criteria, values are assigned. In Table 2, certain random values are chosen for the purpose of illustration. However, these values may vary depending on the risk criteria. Table 2 also depicts the risk rating associated with each parameter $P_1$ to $P_7$. For each of the logical risk rating, a corresponding numerical value, for example, $R_1$, $R_2$, and $R_3$ is assigned as risk rating score. The table further depicts calculating of WARS based on the total number of parameters and the numerical risk rating score. The WARS is compared with a threshold value to determine the overall risk rating associated with the event A.

Event A (Instant 1)

Table 2

| Parameter | Event Risk Criteria | Value | Risk Rating | Risk Rating Score | WARS | Threshold Value | Overall Risk Rating |
|---|---|---|---|---|---|---|---|
| $P_1$ | Event Classification | Mandatory | LOW | $R_1$ | $\dfrac{3R_1+3R_2+R_3}{7}$ | 'X$_1$' | 'Y$_1$' |
| $P_2$ | Event Type | Cash Dividend | LOW | $R_1$ | | | |
| $P_3$ | Number of Options | 2 | MEDIUM | $R_2$ | | | |
| $P_4$ | Security Listing Region | APAC | MEDIUM | $R_2$ | | | |
| $P_5$ | Number of Entitled Positions | < 5 | LOW | $R_1$ | | | |
| $P_6$ | Position Types | Buys | HIGH | $R_3$ | | | |

(continued)

| Parameter | Event Risk Criteria | Value | Risk Rating | Risk Rating Score | WARS | Threshold Value | Overall Risk Rating |
|---|---|---|---|---|---|---|---|
| $P_7$ | Number of Short Book Positions & Loans | 1 | MEDIUM | $R_2$ | | | |

In an implementation, after determining the WARS, the ERA module 118 assesses the overall risk rating of the one or more events based on the determined risk index and a threshold value for the one or more events. In an implementation, the threshold value can be a numerical value specific for a particular event, indicative of the plurality of parameters that determines the risk associated with the particular event. On comparison of WARS with the threshold value, the overall risk rating of the particular event at a given instant of time can be assessed. For example, if the WARS exceed the threshold value, the overall risk rating can be said to be high. Similarly, if the WARS is less that the threshold value, the overall risk rating can be said to be low. In an implementation, the overall risk rating can be a numerical value deterministic of the risk associated with the event and enabling the middle office users to categorize the events based on the overall risk rating. It also enables the middle office users to monitor the overall risk rating over the lifecycle of the event. In another implementation, the overall risk rating can be assessed based on additional rules. The additional rules can be stored in other data 130.

In an implementation, the ERA system 102 may include real-time calculation of the overall risk rating. Once the overall risk rating associated with the event is assessed, the ERA module 118 stores the overall risk rating of the event in the risk assessment data 126. In one implementation, the method includes continuous re-assessment of the overall risk rating associated with one or more events. The ERA system 102 includes continuous monitoring of the key event data (parameters) which affect the risk rating of the event. This aspect of the ERA system 102, in an implementation, is carried out by a re-assessment module 120.

In an implementation, the re-assessment module 120 may include continuous monitoring of changes in the event data throughout its life cycle. The re-assessment module 120 along with the ERA module 118 forms the bases for real-time assessment of risk associated with the one or more corporate action events and the continuous re-assessment thereof. The re-assessment module 120 may include, for example, continuous re-assessment of the overall risk rating of the one or more events throughout their lifecycle. The continuous re-assessment of the overall risk rating of the one or more events by the re-assessment module 120 may further include, considering exceptional scenario conditions.

In another implementation, the re-assessment module 120 may include calculating the overall risk rating at the end of each fmancial day. The overall risk rating is also calculated for each active event in the system and will change the value of the Event Risk Rating if necessary. The ERA system reassesses when either the details of the event or the positions are changed during the day for any active event. The system performs re-assessment each time a user of the middle office attempts to access the event risk assessment.

The ERA system 102 facilitates assessment of overall risk rating of one or more events associated with the financial transactions of the middle office of investment bank. The ERA system 102 further includes real-time assessment of the overall risk rating of one or more events. The ERA system 102 may also include continuous re-assessment of the overall risk rating based on the fluctuating market conditions. The re-assessment may be based on user generated inputs. Thus, the ERA system 102 provides an error-free, optimum assessment of risk associated with the one or more events in a financial institution.

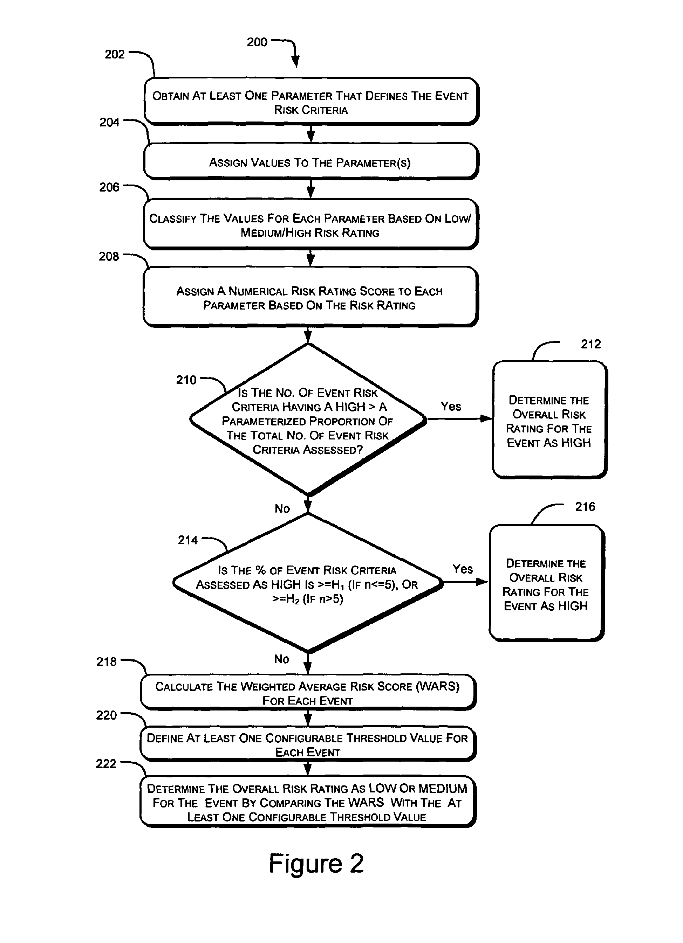

Figure 2 illustrates a method 200 of assessing risk associated with one or more events involved in fmancial activities, in accordance with an implementation of the present subject matter. The exemplary method 200 may be described in the general context of computer executable instructions. Generally, computer executable instructions can include routines, programs, objects, components, data structures, procedures, modules, functions, and the like that perform particular functions or implement particular abstract data types. The method may also be practiced in a distributed computing environment where functions are performed by remote processing devices that are linked through a communication network. In a distributed computing environment, computer executable instructions may be located in both local and remote computer storage media, including memory storage devices.

The order in which the method is described is not intended to be construed as a limitation, and any number of the described method blocks can be combined in any order to implement the method, or alternate methods. Additionally, individual blocks may be deleted from the method without departing from the spirit and scope of the subject matter described herein. Furthermore, the method can be implemented in any suitable hardware, software, firmware, or combination thereof. The method described herein is with reference to the ERA system 102 and in the context of assessing risk associated with one or more events in the financial transactions of the middle office in the investment bank. However, the method can be implemented in other similar systems albeit and in other organizations with a few variations as will be best understood by a person skilled in the art.

At block 202, at least one parameter that defines a risk criteria associated with one or more events is obtained. In one implementation, the ERA module 118 is configured to obtain at least one parameter pertaining to the risk criteria associated with the one or more events. The risk criteria may include, for example, classification of the one or more events, type of the one or more events, number of options associated with the one or more events, geographic location of the one or more events, number of entitled positions of the one or more events, type of positions of the one or more events, and number of short book positions and loans associated with the one or more events. Further to the above mentioned risk criteria, the ERA module 118 is configured to include additional criteria to define the parameters for a particular event.

At block 204, values are assigned to each parameter obtained for the one or more events. The ERA module 118 assigns values to the at least one parameter based on the risk criteria of the one or more events. The values may include one or more conditions that classify the risk criteria of the one or more events further. In an implementation, the values for the event risk criteria of classification of one or more events may include, for example, mandatory, mandatory with options, and voluntary.

At block 206, the values for each parameter are classified based on determination of a risk rating. The risk rating for each value in a parameter is a logical low/medium/high. In an implementation, the ERA module 118, may include, for example, the risk associated with the event risk criteria of the number of entitled positions whose assigned values are <5, 6 to 10, and >10, as LOW, MEDIUM, and HIGH respectively.

At block 208, a numerical risk rating score is assigned to each parameter based on the determined risk rating. On assigning numerical risk rating scores to the logical risk ratings, each parameter at an instant of time, may include a particular score. In an implementation, the risk rating scores, for example, may include $R_1$ for a logical risk rating of LOW, $R_2$ for a logical risk rating of MEDIUM, and $R_3$ for a logical risk rating of HIGH.

At block 218, the WARS is calculated for each event. In the illustration depicted in Table 2, the WARS is calculated, say for the event A, by determining the number of occurrences of each risk rating score and obtaining the product of each risk rating score ($R_1$, $R_2$ or $R_3$) and their respective occurrences for the plurality of parameters for each event. The ratio of sum of all such products to the sum of all the occurrences provides the WARS.

Further, in the above example, in one implementation, the risk assessment module 118 is configured to compute the WARS, say for event A using equation 1:

$$WARS = \frac{\sum_{i=0}^{i=N} R_i \times W_i}{\sum_{i=0}^{i=n} W_i} \quad \ldots\ldots\ldots\ldots\ldots(Eq.1)$$

where WARS represents the weighted average risk score for the event A, N represents the total number of occurrences of a particular risk rating score for the event A, while Ri and Wi are the risk rating scores and weightage (or) total number of parameters respectively for the event A.

As shown in block 220, a configurable threshold value for the event A is defined. As illustrated in Table 2, the event A, for example, may be assigned a threshold value of '$X_1$'. The threshold value $X_1$ can be assigned based on various deterministic factors, which may include, for example, the type of event, the classification of event, or the current market condition. The threshold value $X_1$, in an implementation, may vary with time during the lifecycle of the event A.

As illustrated in block 222, the overall risk rating for the event A is determined by comparing the WARS with the configurable threshold value. In an implementation, the overall risk rating for the event A can be '$Y_1$'. In an implementation, the overall risk rating $Y_1$ can be a numerical score that can differ based on the deviation of WARS from the configurable threshold value $X_1$. For example, for the event A, if WARS is greater than $X_1$, the overall risk rating can be $Y_1$. Similarly, for the event A, if WARS is lesser than $X_1$, the overall risk rating can be $Y_k$ and so on.

In another implementation, at block 208, numerical risk rating scores for each parameters based on the risk rating are assigned. In an implementation, Table 3 provided below provides numerical risk rating scores for each logical risk ratings. In an implementation, the ERA system maintains these numerical risk rating scores as user-configurable parameters and would normally be set as a part of the initial system configuration during installation. These numerical risk rating scores are configured to be modified subsequently if required.

Table 3

| Risk Rating | Risk Rating score |
|---|---|
| 'LOW' | 10 |
| 'MEDIUM' | 20 |
| 'HIGH' | 30 |

In an implementation, at block 208, the event risk criteria for which a risk rating could not be assessed because of insufficient data is excluded. In an implementation, at block 220, if the WARS calculated at block 218, is below a configurable threshold value, then the overall risk rating calculated at block 222, will be LOW, i.e. if WARS < $X_1$. Similarly, if it is above configurable threshold value then the overall risk rating will be HIGH, i.e. if WARS > $X_1$. In an implementation, the WARS calculated at block 218 can be neither lesser than $X_1$, nor greater. In such cases, the overall risk rating will be MEDIUM. In an implementation, the ERA system determines the number of event risk criteria that has been allocated a HIGH risk rating score. In an implementation, if the no. of event risk criteria that are allocated a HIGH risk rating score out of the total number of event risk criteria assessed is high, then the overall risk rating will be rated as HIGH. If this proportion is not exceeded then the ERA system will continue to calculate the overall risk rating by comparing the weighted average of the risk rating score with a pre-determined threshold value.

In an implementation, at block 212, the method 200 determines whether the overall risk rating of the event A is HIGH based on the assessment at block 210, if the number of event risk criteria that is having a logical HIGH is greater than a parameterized proportion of the total number of event risk criteria that is assessed. If not, the system calculates the WARS of the event risk rating at block 218 to determine whether the overall risk rating is either LOW or MEDIUM at block 222. Table 4 depicted below provides a list of parameters for initially determining whether the overall risk rating is HIGH that is followed by the determination of LOW or MEDIUM overall risk rating.

Table 4

| | Symbol Value | Default Value | Example Value |
|---|---|---|---|
| | (Configurable Parameters in bold) | | |
| Total Number of Active Event Risk Criteria | N | | 7 |
| Total number of Event Risk Criteria that were assessed, i.e., excluding 'blanks' | n | | 7 |
| HIGH Risk rating Score | **R** | **30** | |
| MEDIUM Risk Rating Score | **A** | **20** | |
| LOW Risk Rating Score | **G** | **10** | |
| Number of Event Risk Criteria assessed as HIGH | r | | 3 |
| Number of Event Risk Criteria assessed as MEDIUM | a | | 1 |
| Number of Event Risk Criteria assessed as LOW | g | | 3 |
| % of Event Risk Criteria assessed as HIGH will set Event Risk Rating = HIGH (<=5 criteria assessed) | **H1** | **25** | |
| % of Event Risk Criteria assessed as HIGH will set Event Risk Rating = HIGH (> 5 criteria assessed) | **H2** | **35** | |
| % tolerance for LOW ERR (criteria allowed to be MEDIUM and still score ERR as LOW | **xLM** | **34** | |
| % tolerance for MEDIUM ERR (criteria allowed to be HIGH and still score ERR as MEDIUM | **xMH** | **20** | |
| Event Risk Rating threshold - 'LOW' to 'MEDIUM' (see Tab "ERR threshold LOW - MEDIUM") | LM | | 13.4000 |

(continued)

|  | Symbol Value | Default Value | Example Value |
|---|---|---|---|
|  | (Configurable Parameters in bold) | | |
| Event Risk Rating threshold - 'MEDIUM' to 'HIGH' (see Tab "ERR threshold MEDIUM -HIGH") | MH |  | 22.0000 |

In an implementation, at block 216, the method 200 assess whether the overall risk rating of the event A is HIGH by determining the number of event risk criteria that is assessed as HIGH. In an implementation, at block 214, the method 200 determines the overall risk rating as HIGH if the percentage of the event risk criteria assessed as HIGH is >= $H_1$ (if n <=5), or >=$H_2$ (if n>5). In an implementation, $H_1$ is configured as a primary value and $H_2$ is configured as a secondary value. In an implementation the value assigned for $H_1$ will be 25 and for $H_2$ will be 35. In the example depicted in Table 4, the number of HIGH event risk rating criteria assessed is 3, while the number of event risk rating criteria assessed as MEDIUM and LOW are 1 and 3 respectively. In the above example, the overall risk rating, also referred to as event risk rating is calculated as illustrated below.

Event Risk Rating will be HIGH if: % of Event Risk Criteria assessed HIGH >= 25% number of Event Risk Criteria assessed (if<=5), or >=35% number of Event Risk Criteria assessed (if>5); i.e. if (r x 100)/n >= H1 if n<=5, or if (r x 100)/n >= H2 if n>5; Event Risk Rating will be HIGH if: 300/7 >= 35, i.e. if 42.85714 >= 35, which is TRUE. So Event Risk Rating is automatically set as HIGH.

In an implementation, at block 218, the method 200 calculates WARS to assess the overall risk rating when the overall risk rating is not rated as HIGH. In an implementation, the method 200 calculates the WARS as illustrated below.

$$\text{Weighted Average Event Risk} = \text{ROUND}\left[\frac{rR + aA + gG}{n}\right]$$

For example, the WARS can be calculated for the values provided in Table 4 as shown below.

$$\text{Weighted Average Event Risk} = \text{ROUND}\left[\frac{90 + 20 + 30}{7}\right] = 20$$

In an implementation, the WARS calculated at block 218, is compared with the threshold value at block 222, to determine the overall risk rating of the event A. In an implementation, the threshold value is calculated, at block 220, for two conditions, viz. a first threshold value below which the overall risk rating is LOW and a second threshold value above which the overall risk rating is HIGH. The calculation of overall risk rating on comparing the WARS with the first and second threshold values, viz. the LOW to MEDIUM threshold value and the MEDIUM to HIGH threshold value, is illustrated as below.

$$\text{ERR threshold for LOW}\!-\!>\text{MEDIUM rating} = \left[1 - \left[\frac{xLM}{100}\right]\right]^{G} + \left[\frac{xLM}{100}\right]^{A}$$

$$\text{ERR threshold for MEDIUM}\!-\!>\text{HIGH rating} = \left[1 - \left[\frac{xMH}{100}\right]\right]^{A} + \left[\frac{xMH}{100}\right]^{R}$$

For example, the threshold value can be calculated for the values provided in Table 4 as shown below.

$$\text{ERR threshold for LOW} -> \text{MEDIUM rating} = \left[1 - \left[\frac{34}{100}\right]\right]^{10} + \left[\frac{34}{100}\right]^{20} = 13.4000$$

$$\text{ERR threshold for MEDIUM} -> \text{HIGH rating} = \left[1 - \left[\frac{20}{100}\right]\right]^{20} + \left[\frac{20}{100}\right]^{30} = 22.0000$$

In an implementation, the WARS calculated, at block 218, for an overall risk rating other than HIGH is compared, at block 222, with the two threshold values to determine the overall risk rating of the event. In case the WARS is greater than the second threshold value i.e. the MEDIUM to HIGH threshold value, the overall risk rating is determined as HIGH. For example, the WARS as calculated above is 20, when compared with the second threshold value i.e. 22, it is determined that the WARS is not greater than the second threshold value. Therefore, the overall risk rating is not HIGH.

Similarly, when the WARS is lesser than or equal to the first threshold value i.e. the LOW to MEDIUM threshold value, the overall risk rating is determined as LOW. For example, the WARS as calculated above is 20, when compared with the first threshold value i.e. 13.4, it is determined that the WARS is not lesser than or equal to the first threshold value. Therefore, the overall risk rating is not LOW. In the above example, the overall risk rating is determined to be MEDIUM.

Although embodiments for assessing the risk associated with one or events and further re-assessment of overall risk rating have been described in language specific to structural features and/or methods, it is to be understood that the invention is not necessarily limited to the specific features or methods described. Rather, the specific features and methods are disclosed as exemplary embodiments for methods and systems for assessment of risk for one or more events in transactions relating to financial services in the middle office of investment banks.

## Claims

1.  A method for assessment of overall risk rating of one or more events in transactions relating to financial services, the method comprising:

    obtaining at least one parameter indicative of a risk criteria associated with the one or more events;
    assigning values to the at least one parameter;
    determining a risk rating based on the values assigned for the at least one parameter;
    generating a risk index for the one or more events based on the risk rating; and
    assessing overall risk rating of the one or more events based at least in part on one of the risk index and at least one threshold value for the one or more events.

2.  The method as claimed in claim 1, wherein the assessing is real-time.

3.  The method as claimed in claim 1, wherein the assigning values depends on the type of the at least one parameter.

4.  The method as claimed in claim 1, wherein the generating the risk index comprises:

    calculating a weighted average risk score for the one or more events;
    comparing the weighted average risk score with the at least one threshold value to obtain the overall risk rating of the one or more events; and
    assigning a numerical score to the risk rating.

5.  The method as claimed in claim 1, wherein the generating the risk index comprises determining a number of risk rating having a logical HIGH.

6.  The method as claimed in claim 5, wherein the assessing the overall risk rating of the one or more events further comprises determining the overall risk rating as HIGH.

7. The method as claimed in claim 5, wherein the generating further comprises determining a percentage of risk rating having the logical HIGH based on one of a primary value, a secondary value, and a total number of risk rating.

8. The method as claimed in claim 7, wherein the assessing the overall risk rating of the one or more events further comprises determining the overall risk rating as HIGH.

9. The method as claimed in claim 1, wherein the at least one parameter can be an extendable risk evaluation parameter based at least in part on dynamic market conditions.

10. An event risk assessment (ERA) system (102), for assessment of overall risk rating of one or more events in transactions relating to financial services, the system (102) comprising:

   a processor (108); and
   a memory (112) coupled to the processor (108), the memory (112) comprises an event risk assessment module (118) configured to:

      obtain at least one parameter indicative of a risk criteria associated with the one or more events;
      assign values to the at least one parameter;
      determine a risk rating based on the values assigned for the at least one parameter;
      generate a risk index for the one or more events based on the risk rating; and
      assess overall risk rating of the one or more events based at least in part on one of the risk index and at least one threshold value for the one or more events.

11. The ERA system (102) as claimed in claim 10, wherein the ERA system (102) further comprises a re-assessment module (120) configured to continuously reassess the overall risk rating of the one or more events.

12. The ERA system (102) as claimed in claim 11, wherein the re-assessment module (120) is further configured to reassess the overall risk rating of the one or more events based at least in part on one or more exceptional scenario conditions.

13. The ERA system (102) as claimed in claim 11, wherein the re-assessment module (120) is further configured to modify the at least one parameter in response to a request based at least in part on an user generated input.

14. The ERA system (102) as claimed in claim 11, wherein the event risk assessment module (118) obtains the at least one parameter based in part on, classification of the one or more events, type of the one or more events, number of options associated with the one or more events, geographic location of the one or more events, number of entitled positions of the one or more events, type of positions of the one or more events, and number of short book positions and loans associated with the one or more events.

15. A computer-readable medium having computer-executable instructions that when executed perform acts comprising:

   obtaining at least one parameter indicative of a risk criteria associated with the one or more events;
   assigning values to the at least one parameter;
   determining a risk rating based on the values assigned for the at least one parameter;
   generating a risk index for the one or more events based on the risk rating; and
   assessing overall risk rating of the one or more events based at least in part on one of the risk index and at least one threshold value for the one or more events.

Figure 1

EP 2 575 102 A1

200

202 — OBTAIN AT LEAST ONE PARAMETER THAT DEFINES THE EVENT RISK CRITERIA

204 — ASSIGN VALUES TO THE PARAMETER(S)

206 — CLASSIFY THE VALUES FOR EACH PARAMETER BASED ON LOW/ MEDIUM/HIGH RISK RATING

208 — ASSIGN A NUMERICAL RISK RATING SCORE TO EACH PARAMETER BASED ON THE RISK RATING

210 — IS THE NO. OF EVENT RISK CRITERIA HAVING A HIGH > A PARAMETERIZED PROPORTION OF THE TOTAL NO. OF EVENT RISK CRITERIA ASSESSED?

Yes → 212 DETERMINE THE OVERALL RISK RATING FOR THE EVENT AS HIGH

No

214 — IS THE % OF EVENT RISK CRITERIA ASSESSED AS HIGH IS $>=H_1$ (IF $n<=5$), OR $>=H_2$ (IF $n>5$)

Yes → 216 DETERMINE THE OVERALL RISK RATING FOR THE EVENT AS HIGH

No

218 — CALCULATE THE WEIGHTED AVERAGE RISK SCORE (WARS) FOR EACH EVENT

220 — DEFINE AT LEAST ONE CONFIGURABLE THRESHOLD VALUE FOR EACH EVENT

222 — DETERMINE THE OVERALL RISK RATING AS LOW OR MEDIUM FOR THE EVENT BY COMPARING THE WARS WITH THE AT LEAST ONE CONFIGURABLE THRESHOLD VALUE

Figure 2

Europäisches
Patentamt

European
Patent Office

Office européen
des brevets

# EUROPEAN SEARCH REPORT

Application Number

EP 11 00 9983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject matter, with due regard to the description and drawings (Art. 92 EPC), relates inter alia to methods and activities excluded from patentability under Art.52(2) and (3) EPC. The applicant is advised that in accordance with the established practice of the EPO, no search need be performed in respect of those aspects of the claimed invention.The only identifiable technical aspects of the claimed invention relate to the use of conventional, general-purpose information technology for processing data of an inherently non-technical nature. The information technology employed is considered to have been generally known as it was widely available to everyone at the date of filing/priority of the present application. The notoriety of such prior art cannot reasonably be contested. Accordingly, no documentary evidence is considered required, as the technical aspects identified in the present application are considered part of common general knowledge.For further details see the Notice from the European Patent Office dated 1 October 2007 (OJ 11/2007; p592f) and the accompanying Opinion.<br>----- | | INV.<br>G06Q40/06 |

| | | | TECHNICAL FIELDS SEARCHED (IPC) |
|---|---|---|---|
| | | | G06Q |

The present search report has been drawn up for all claims

| Place of search | Date of completion of the search | Examiner |
|---|---|---|
| Munich | 5 September 2012 | Krafft, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

EPO FORM 1503 03.82 (P04C01)